# EUROPEAN PATENT SPECIFICATION

(11) **EP 3 979 636 B1**
(45) Date of publication and mention of the grant of the patent: **24.01.2024**
(21) Application number: 20199133.8
(22) Date of filing: 30.09.2020
(51) Int. Cl.: H04N 9/31, G02B 26/08

(54) **MIRROR SYSTEM FOR A PROJECTION APPARATUS**
SPIEGELSYSTEM FÜR EINE PROJEKTIONSVORRICHTUNG
SYSTÈME DE MIROIR POUR UN APPAREIL DE PROJECTION

(43) Date of publication of application: 06.04.2022
(73) Proprietor: Imec VZW, 3001 Leuven (BE)
(72) Inventor: SAITO, Daisuke, 3001 Leuven (BE); ROCHUS, Veronique, 3001 Leuven (BE); LENCI, Silvia, 3001 Leuven (BE); BRONDANI TORRI, Guilherme, 3001 Leuven (BE)
(74) Representative: Roth, Sebastian

(56) References cited:
- US-A1- 2002 041 455
- US-A1- 2003 147 158
- US-A1- 2009 009 851
- US-A1- 2009 034 043
- US-A1- 2009 103 053
- US-A1- 2010 067 096

## Description

### TECHNICAL FIELD OF THE INVENTION

The present disclosure relates to a mirror system for a projection apparatus and to a projection apparatus comprising such a mirror system.

### BACKGROUND OF THE INVENTION

Generally, a spatial light modulator (SLM) is a device, which spatially modulates a light beam, e.g. to generate an image. An example for an SLM is a video projector, which dynamically modulates a light beam to generate a video that can be projected onto a surface.

An SLM can use a digital mirror device (DMD) to modulate the light. A DMD comprises an array of mirrors, which can be individually deflected or tilted to achieve a certain light modulation. The mirrors are usually micro mirrors, which are MEMS components that are actuated electronically. In order to generate a specific image, certain mirrors of the array are set to an ON state, where they reflect the light beam onto the aperture, while other mirrors are set to an OFF state, where they reflect the light beam away from the aperture. Typically, each mirror of the mirror array corresponds to one pixel of the generated image.

The technical trend of SLMs with DMDs goes towards a fine pixel pitch of the image, which is achieved by mirror arrays with small mirror pitch. At the same time, the fill factor of the mirror array should be kept as high as possible, i.e. the distance between the mirrors should be as small as possible. This can lead to several problems, such as a lower optical efficiency of the DMD and a lower contrast of the generated image.

In particular, it is difficult to achieve sufficient tilting of the mirrors to prevent stray light and diffracted light from mirrors in the OFF state to reach the aperture, which can decrease the contrast of the generated image. In addition, it is difficult to avoid unwanted variations of the tilting angles of the mirrors, which can lead to an additional loss of contrast.

US 2009/009851 A discloses a projection apparatus with a coherent light source. US 2003/147158 A1 discloses a prism for high contrast projection. US 2009/103053 A1 discloses a projection apparatus comprising a spatial light modulator.

### SUMMARY OF THE INVENTION

Thus, it is an objective to provide an improved mirror system for a projection apparatus and to provide an improved projection apparatus comprising such a mirror system. In particular, the above-mentioned disadvantages should be avoided.

The objective is achieved by the embodiments provided in the enclosed independent claims. Advantageous implementations of the embodiments of the invention are further defined in the dependent claims.

According to a first aspect, the present disclosure relates to a mirror system for a projection apparatus, wherein the projection apparatus comprises a light source and an aperture, and wherein the mirror system comprises a support surface; and a plurality of mirrors arranged on the support surface; wherein each of the plurality of mirrors is arranged tiltable between a first and a second tilting position, wherein the first and the second tilting position are discrete positions; wherein each mirror in the first tilting position is arranged to reflect a light beam that is emitted from the light source onto the aperture; wherein each mirror in the second tilting position is arranged to reflect the light beam that is emitted from the light source away from the aperture; wherein a tilting axis of each of the plurality of mirrors passes through or lies below the center of gravity of the mirror; and wherein the first and the second tilting position of each of the plurality of mirrors are asymmetrical to each other, especially relative to an axis that is perpendicular to the support surface, wherein two stopper structures are arranged on the support surface below each mirror of the plurality of mirrors, wherein a mirror in the first tilting position is in physical contact with one of the two stopper structures, and wherein the mirror in the second tilting position is in physical contact with the other one of the two stopper structures, wherein the two stopper structures below each mirror of the plurality of mirrors have a different height and/or are arranged at a different distance from the tilting axis of the mirror; characterized in that at least one recess is arranged in the support surface below each of the plurality of mirrors, wherein an edge of each mirror of the plurality of mirrors in the first and/or the second tilting position at least partially sinks into the recess below the mirror.

This achieves the advantage that the mirror system can generate an image with a high spatial resolution and a high contrast. In particular, the increased contrast is mainly achieved by the asymmetry between the first and the second tilting position, which allows adjusting the second tilting position to prevent diffraction light and/or stray to reach the aperture. At the same time, the tilting axis passing through or lying below the center of gravity of each mirror reduces the effect of unwanted misalignments and deviations on the tilting angles of the mirrors, thus, reducing the tilting angle variation of the mirrors and further enhancing the contrast.

In particular, the tilting axis passing through or lying below the center of gravity of each mirror means that the horizontal tilt axis is perpendicular to a vertical symmetry axis, which passes through the center of gravity of the mirror.

In particular, the geometry and/or exact position of the stopper structures can be controlled with high accuracy during a fabrication process. Thus, unwanted misadjustments or variations of the tilting angle from mirror to mirror, which would reduce the contrast of the image, can be avoided.

Preferably, the first tilting position corresponds to an ON state of each mirror, and the second tilting position corresponds to an OFF state of each mirror. In particular, each mirror in the ON state corresponds to a bright pixel, and each mirror in the OFF state corresponds to a dark pixel in an image that is generated by the projection apparatus.

Preferably, the mirror system comprises a mirror array. The plurality of mirrors may comprise all or a part of the mirrors of the mirror array. The mirror array can have a mirror pitch of less than 5 µm, in particular 4 µm, and/or a filling factor of more than 80%, in particular more than 90%, more particular more than 95%.

The projection apparatus can be a spatial light modulator (SLM), e.g. a video projector, and the mirror system can be a digital mirror device (DMD) of the SLM.

Preferably, the first and the second tilting position are discrete positions, i.e. the tilting positions and the respective tilting angles are clearly defined.

In particular, each mirror in the second tilting position is arranged to reflect the light beam that is emitted from the light source onto a light absorption structure of the projection apparatus.

In an embodiment, an inclination of each mirror in the first tilting position to the mirror in the second tilting position is at least 10°, preferably at least 20°. This achieves the advantage that the amount of diffraction or stray light that reaches the aperture from mirrors in the second tilting position can be reduced, increasing the contrast of the image.

In an embodiment, a mount is arranged on the support surface below each of the plurality of mirrors, wherein each of the plurality of mirrors is fixated to the support surface by the respective mount that is arranged below that mirror. This achieves the advantage that the mirrors can be efficiently mounted on the support surface.

In an embodiment, each of the plurality of mirrors comprises a hinge structure, in particular a hinge layer, on a bottom of the mirror, wherein the respective mount is fixed to the hinge structure of the mirror. This achieves the advantage that the mirrors can be efficiently tilted.

In an embodiment, each of the plurality of mirrors is tiltable around the respective mount. This achieves the advantage that an efficient tilting with a high delta, i.e. difference, of the tilting angle between the first and second tilting position can be achieved.

In an embodiment, each of the plurality of mirrors comprises a cavity on the bottom of the mirror, wherein the attachment point of the respective mount is arranged in or below the cavity. This achieves the advantage that an efficient tilting of the mirror around the mount can be achieved. In particular, it can be avoided that the movement is of the mirror is limited by the underside of the mirror bumping against the mount. For example, the cavity is a channel along a diagonal line between two opposite corners of the mirror.

In an embodiment, a pair of actuation electrodes is arranged on the support surface below each of the plurality of mirrors, wherein the actuation electrodes below each mirror are configured to actuate the movement of the mirror from the first to the second tilting position and vice versa. This achieves the advantage that the tilting of each mirror can be efficiently controlled.

In an embodiment, the pair of actuation electrodes of each mirror are arranged on opposite sides and at equal distances to the tilting axis of the mirror.

In an embodiment, each of the plurality of mirrors comprises a spring element on an underside of the mirror, which preferably supports the movement of the mirror from the first to the second tilting position and vice versa. This achieves the advantage that less force, i.e. less energy, is required to actuate the movement of the mirrors.

Further, the switching speed of the mirrors can be enhanced. In particular, the effect of stiction between the mirror and the support surface can be reduced.

Preferably, the spring element comprises one or more spring layers, which at least partially cover the underside of the mirror. In particular, the spring element and the hinge structure are made from the same layer. The spring element of each mirror can be arranged to be in physical contact with one of the stopper structures in the first respectively second tilting position.

In an embodiment, at least some of the mirrors of the plurality of mirrors that are arranged in the second tilting position form a Blazed grating for the light beam. This achieves the advantage that light that is reflected off mirrors in the second tilting position is efficiently focused away from the aperture. In particular, the amount of diffraction light and/or stray light from mirrors in the second tilting position that reaches the aperture is reduced.

In an embodiment, the angle at which the light beam is reflected off the at least some of the mirrors in the second tilting corresponds to a Blaze angle of the Blazed grating. This achieves the advantage that light that is reflected off mirrors in the second tilting position is efficiently focused away from the aperture.

In other words, most or all of the mirrors that are arranged in the second tilting position fulfill the Blazed condition for the light that is emitted by the light source of the projection apparatus. In particular, the angle of the light beam that is reflected off the at least some of the mirrors in the second tilting position corresponds to a -nth order diffraction, in particular a -1st or -2nd order diffraction, of the Blazed grating.

In particular, the Blaze grating condition is fulfilled for light in the wavelength range that is emitted by the light source of the projection apparatus.

According to a second aspect, the present disclosure relates to a projection apparatus, comprising a light source, an aperture and a mirror system according to the first aspect of the present disclosure.

This achieves the advantage that a projection apparatus can be provided that generates images with a high spatial resolution and a high contrast.

### BRIEF DESCRIPTION OF THE DRAWINGS

The invention will be explained in the followings together with the figures.
- Fig. 1: shows a schematic diagram of a mirror system according to an embodiment;
- Fig. 2: shows a schematic diagram of a section of a mirror system according to an embodiment;
- Figs. 3a-b: show a bottom view and a perspective view of the section from Fig. 2 according to an embodiment;
- Fig. 4: shows a schematic diagram of a section of an exemplary mirror system.
- Figs. 5a-b: show a bottom view and a perspective view of the section from Fig. 4; and
- Figs. 6a-b: show schematic diagrams of a projection apparatus according to an embodiment.

### DETAILED DESCRIPTION OF THE PREFERRED EMBODIMENTS

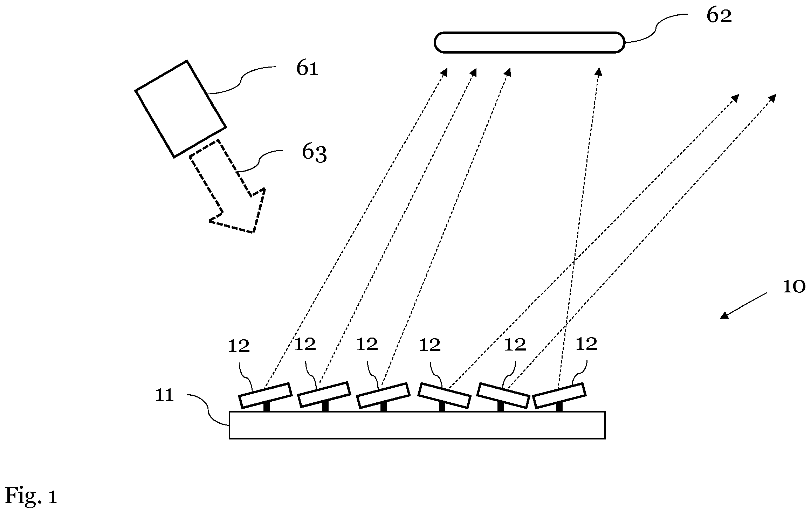

Fig. 1 shows a schematic diagram of a mirror system 10 according to an embodiment. The mirror system 10 is suitable for a projection apparatus, which comprises a light source 61 and an aperture 62.

The mirror system 10 comprises a support surface 11, and a plurality of mirrors 12 arranged on the support surface 11, wherein each of the plurality of mirrors 12 is arranged tiltable between a first tilting position and a second tilting position, wherein the first tilting position and the second tilting position are discrete positions. Each mirror 12 in the first tilting position is arranged to reflect a light beam 63 that is emitted from the light source 61 onto the aperture 62, and each mirror 12 in the second tilting position is arranged to reflect the light beam 63 that is emitted from the light source 61 away from the aperture 62.

Thereby, a tilting axis of each of the plurality of mirrors 12 passes through or lies below the center of gravity of the mirror 12, wherein the first and the second tilting position of each of the plurality of mirrors 12 are asymmetrical to each other, especially relative to an axis that is perpendicular to the support surface 11.

In particular, the tilting axis passing through or lying below the center of gravity of the mirror 12 means that the tilting axis is perpendicular to a vertical symmetry axis, which passes through the center of gravity of the mirror 12.

The mirrors 12 on the support surface 11 can form a mirror array, e.g. a square or a hexagonal array. The mirror array can have a mirror pitch of less than 5 µm, e.g. 4 µm, and/or a filling factor of more than 80%, in particular more than 90%, more particular more than 95%.

In particular, the first and the second tilting position are discrete positions, i.e. the tilting positions and the respective tilting angles are clearly defined. The tilting positions can be defined by a respective tilting angle relative to the axis that is perpendicular to the support surface.

In the exemplary embodiment of Fig. 1, the first three mirrors 12 from the left are arranged in the first tilting position, the fourth and fifth mirror 12 are arranged in the second tilting position, and the sixth mirror 12 is again arranged in the first tilting position. The first tilting position can correspond to an ON state of the mirrors 12, and the second tilting position can correspond to an OFF state of the mirrors 12. In particular, each mirror 12 in the ON state corresponds to a bright pixel, and each mirror 12 in the OFF state corresponds to a dark pixel in an image that is generated on a screen behind the aperture 62.

The asymmetry between the first and the second tilting position of each mirror 12 may refer to different absolute values of the respective tilting angles of each mirror 12 in the first and second tilting position, respectively, wherein the tilting angle is measured against an axis that is perpendicular to the support surface 11. For example, the tilting angle in the ON state of a mirror 12 may be +8° and the tilting angle in the OFF state of the mirror 12 may be -12°.

In particular, due to the asymmetry between the two tilting positions, the tilting angles of mirrors in second tilting position can be efficiently adjusted to prevent stray light and light that is diffracted off these mirrors from reaching the aperture. In this way the contrast of the generated image can be enhanced. For example, a contrast of 3000:1 can be achieved. In addition, the tilting axis passing through or lying below the center of gravity of each mirror reduces the effect of unwanted misalignments and deviations during fabrication of the mirror system on the tilting angles of the mirrors and, thus, on the achievable contrast.

In contrast, mirrors with an asymmetric design of the tilting axis, i.e. a tilting axis that is laterally offset to the center of gravity of the mirror, would be more susceptible to such deviations. Such mirrors would have the further disadvantage of an unbalanced weight of the mirrors which causes an unbalanced load at the hinge of the mirrors that decreases a response time of the mirrors, i.e. the mirrors can be switched less quickly. Both these disadvantages are mitigated by aligning the tilting axis of each mirror with the center of gravity of the mirror.

The inclination of each mirror 12 in the first tilting position to the mirror 12 in the second tilting position can be at least 10°, preferably at least 20°. In particular, the larger this inclination, the better diffractions and stray light from the mirrors 12 in the OFF state can be deflected from the aperture 62.

In an optional embodiment, some or all of the mirrors 12 that are arranged in the second tilting position (OFF state) form a Blazed grating for the light beam 63, i.e. some or all mirrors 12 in the second tilting position fulfill the Blazed condition for the light of the light beam 63. The angle, at which the light beam 63 is reflected off each mirror 12 in the second tilting, may thereby correspond to a Blaze angle of the Blazed grating, in particular to a -1^{st}. -2^{nd}, or -n^{th} order diffraction of the Blazed grating. In this way, the intensity of the light that is reflected off the mirrors 12 in the OFF state is focused on a spot away from the aperture 62, such that even less light from these mirrors 12 reaches the aperture 62.

In particular, further optical elements, such as lenses, prisms, mirrors, filters or optical integrators, which are not shown in Fig. 1, can be arranged between the light source 61 and the mirror system 10 and/or between the mirrors system 10 and the aperture 62, in order to efficiently guide the light between these components.

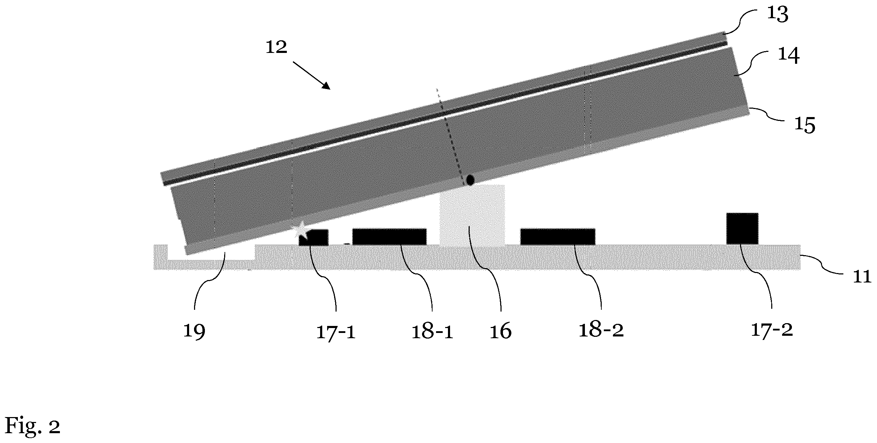

Fig. 2 shows a schematic diagram of a section of the mirror system 10 according to an embodiment. The depicted section comprises a single mirror 12 of the system 10. In particular, each mirror 12 of the mirror system 10 in Fig. 1 might be configured according to the mirror 12 shown in Fig. 2.

The mirror 12 can formed by several material layers. Preferably, the mirror comprises a substrate layer 14, a reflective mirror layer 13 on top of the substrate layer 14 and a bottom layer 15 on the underside of the substrate layer 14.

The mirror 12 can be fixated to the support surface 11 via a mount 16 that is arranged on the support surface 11 below the mirror 12. Preferably, the mount 16 is aligned to the center of gravity of the mirror 12, i.e. a central axis of the mount is directly arranged below the center of gravity of the mirror 12. The mirror 12 can comprise a hinge structure (not shown in Fig. 2) for fixing the mount 16 to mirror 12 in such a way that the mirror can be tilted around the mount 16.

Two stopper structures 17-1, 17-2 are arranged on the support surface 11 below the mirror 12. In particular, these stopper structures 17-1, 17-2 form landing structures for the tillable mirror 12. In the tilting position shown in Fig. 2, which can correspond to the ON state, the mirror 12 is in physical contact with the left stopper structure 17-1. In the other tilting position (OFF state), the mirror 12 is in physical contact with the right stopper structure 17-2. In particular, the geometry and/or exact position of the stopper structures 17-1, 17-2 defines the tilting angles and, thus, the first and second tilting positon of the mirror 12.

Preferably, at least one of the stopper structures 17-1, 17-2 is arranged below an edge or a corner of the mirror 12 to allow the biggest possible deflection of the mirror 12.

As shown in Fig. 2, the two stopper structures 17-1, 17-2 have a different height and/or are arranged at different distances from the tilting axis of the mirror 12. The asymmetry between the first and second tilting position of the mirror 12 can be caused by this asymmetry between the height and/or position of the stopper structures 17-1, 17-2. For example, the left stopper structure 17-1 in Fig. 2 has a height of 0.1 µm and the right stopper structure 17-2 has a height of 0.23 µm.

Generally, the geometry and position of the stopper structures 17-1, 17-2 can be controlled with high accuracy during a fabrication process. Thus, deviations between the tilting angles of the mirrors 12 of the system 10 due to deviations between their respective stopper structures 17-1, 17-2 maybe reduced to less than 0.1°.

In particular, the stopper structures 17-1, 17-2 can be stopper electrodes and/or posts.

As further shown in Fig. 2, a recess 19 is arranged in the support surface 11 below the mirror 12, wherein an edge of the tilted mirror 12 in Fig. 2 partially sinks into the recess 19. This recess 19 allows for a greater deflection of the mirror 12 and further enhances the asymmetry between the first and the second tilting position. Preferably, the recess is a groove or a step in the support surface 11.

To actuate the movement of the mirror 12 from the first to the second tilting position and vice versa, a pair of actuation electrodes 18-1, 18-2 can be arranged on the support surface 11 below the mirror 12.

The actuation electrodes 18-1, 18-2 can be configured to actuate the mirror 12 movement via electrostatic force. The electrostatic force can be generated by applying a voltage between one or both actuation electrodes 18-1, 18-2 and the mirror 12. The voltage can be a bias voltage of ca. 36 V. The required voltage can depend on the size and position of the actuation electrodes 18-1, 18-2 and/or the size and arrangement of the mirror 12. In particular, to amplify the effect of the applied voltage, the actuation electrodes 18-1, 18-2 should be designed as big as possible. The mirror 12 can comprise an electrically conductive layer, e.g. the bottom layer 15 forms or comprises the electrically conductive layer, which is at least arranged in an area above the actuation electrodes 18-1, 18-2. The electrically conductive layer can be electrically connected to the hinge structure on the bottom of the mirror.

Preferably, the actuation electrodes 18-1, 18-2 are arranged on opposite sides and at equal distances to the tilting axis of the mirror 12, i.e. the actuation electrodes 18-1, 18-2 are arranged symmetrically with respect to the mirror 12. This achieves the advantage that the same pull on the mirror 12 for a certain applied voltage can be achieved in the ON and the OFF state of the mirror 12.

Optionally, the mirror 12 comprises a spring element (not shown) on its underside, which supports the movement of the mirror 12 from the first to the second tilting position and vice versa. The spring element can be arranged to initiate physical contact with the stopper structures 17-1, 17-2 in the first and second tilting position, respectively. Thereby, energy can be built up by a deformation of the spring element. This energy can be released if the mirror changes its position, in order to support the movement of the mirror 12. For instance, the spring element is a layer, which at least partially covers the underside of the mirror 12.

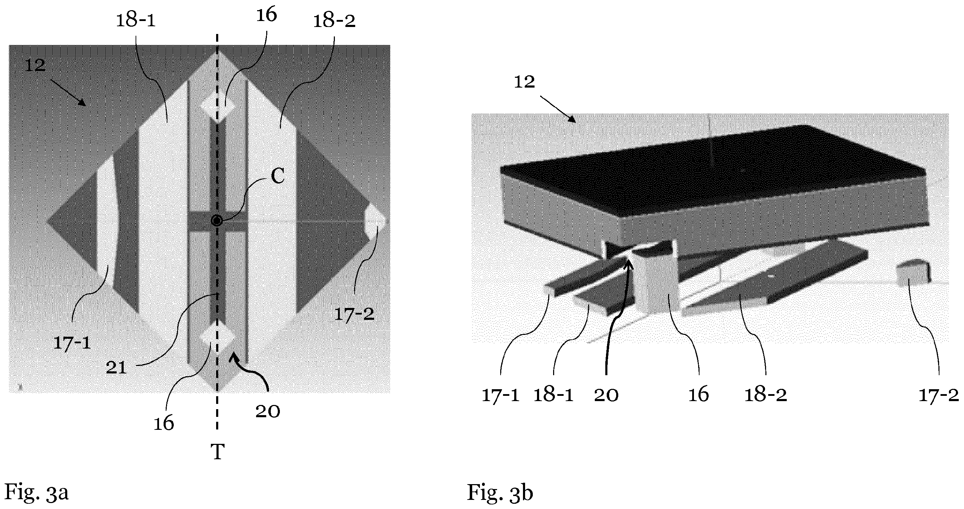

Figs. 3a-b show a bottom view and a perspective view of the section of the mirror system 10 from Fig. 2 according to an embodiment. Thereby, the support surface 11 below the mirror 12 is omitted.

Fig. 3a shows that the mount 16 may comprise two pillars that are attached to a hinge structure 21 of the mirror 12. The hinge structure 21 can be a hinge layer on the bottom of the mirror 12.

The mirror 12 can have a quadratic shape, and the pillars of the mount 16 can be arranged below the mirror along a diagonal connecting line between two opposite corners of the mirror 12. In this configuration, the tilting axis T of the mirror 12 is congruent to this diagonal connecting line and passes through or lies below the center of gravity C of the mirror 12.

For example, the quadratic mirror 12 has a size of 4×4 µm, is arranged at ca. 0.2 µm above the support surface and has a gap of 0.57 µm to a neighboring mirror 12 in the mirror system 10.

The perspective view of the mirror in Fig. 3b shows that the mirror 12 can have a groove or cavity 20 on the bottom of the mirror, wherein the attachment point of the mount 16 is arranged in or below the cavity 21 on the bottom of the mirror 12. For instance, the cavity 20 is a channel that runs along the diagonal connecting line. This cavity 20 can facilitate the tilting of the mirror 12 around the hinge 21 by preventing the mirror 12 from pushing against the mount 16 during tilting.

The hinge structure 21 can at least partially be arranged in the cavity 20. In the particular, the hinge structure 21 is designed to align the tilting axis T such that it passes through the center of gravity C of the mirror.

In particular, the mirror system 10 shown in Fig. 1 might comprise the mount 16, the stopper structures 17-1, 17-2, the actuation electrodes 18-1, 18-2 and/or the recess 19 as shown in Figs. 2, 3a and 3b below each mirror 12.

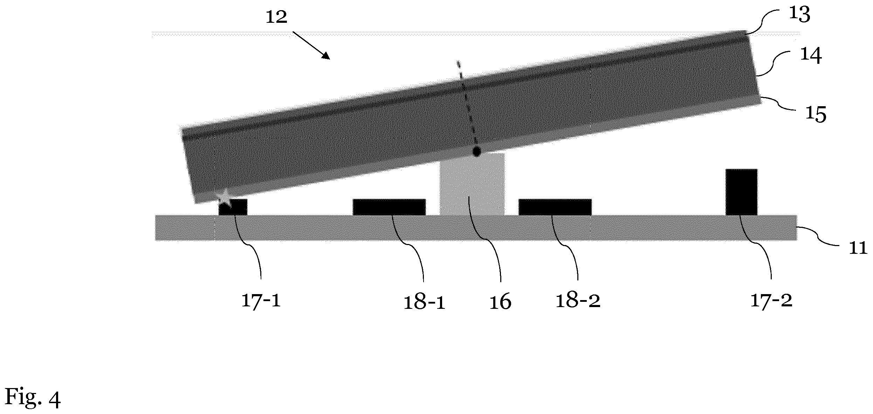

Fig. 4 shows a schematic diagram of a section of the mirror system 10 according to an example. The depicted section comprises a single mirror 12 of the system 10. In particular, each mirror of the mirror system 10 in Fig. 1 might be configured according to the mirror shown in Fig. 4.

In the example of Fig. 4, the support surface 11 comprises no recess 19. Instead, both stopper structures 17-1, 17-2 are arranged symmetrically at equal distances to the tilting axis and/or the mount 16 of the mirror 12. Depending on the fabrication process of the mirror system 10, this additional symmetry might further reduce unwanted variations between the tilting angles of the mirrors 12 in the system 10.

To enhance the asymmetry between the ON and the OFF state of the mirror 12, the height difference between the stopper structures 17-1, 17-2 can be increased compared to the embodiment of Fig. 2. For instance, the left stopper structure 17-1 has a height of 0.1 µm and the right stopper structure 17-2 has a height of 0.36 µm.

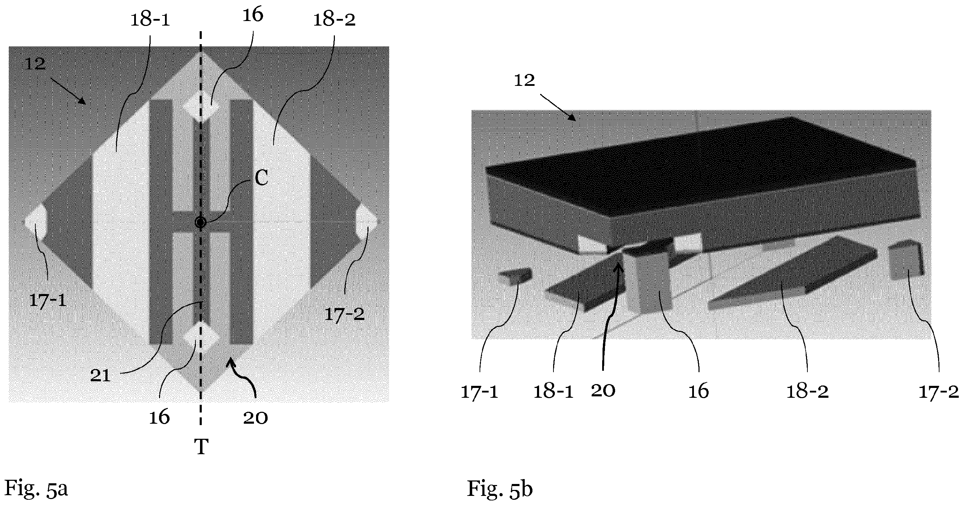

Figs. 5a-b show a bottom view and a perspective view of the section of the mirror system from Fig. 4. Thereby, the support surface 11 below the mirror 12 is omitted.

In particular, the mirror system 10 shown in Fig. 1 might comprise the mount 16, the stopper structures 17-1, 17-2 and/or the actuation electrodes 18-1, 18-2 as shown in Figs. 4, 5a and 5b below each mirror 12.

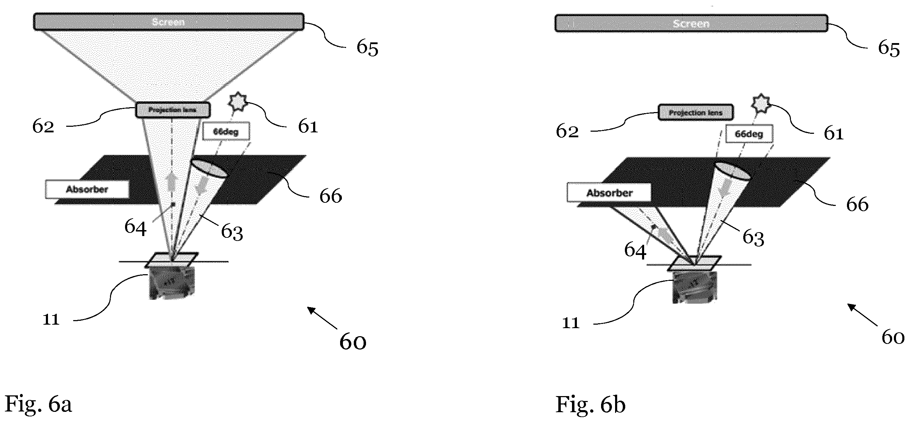

Figs. 6a-b show schematic diagrams of a projection apparatus 60 according to an embodiment.

The projection apparatus 60 comprises the light source 61, the aperture 62 and the mirror system 10 as, for example, shown in Fig. 1. For instance, the projection apparatus 60 is a spatial light modulator (SLM), e.g. a video projector, and the mirror system 10 is a digital mirror device (DMD) of the SLM. The projection apparatus 60 may comprise a processing unit (not shown) that is configured to control the operation of the mirrors 12 of the mirror system 10.

Fig. 6a shows the reflection of the light beam from the mirrors 12 of the mirror system 10 that are in the ON state, and Fig. 6b shows the reflection of the light beam from mirrors 12 of the mirror system 10 that are in the OFF state.

Preferably, the light source 61 is configured to emit the light beam 63 towards the mirror system 10 at an angle of, for instance, 66° (relative to the support surface 11 of the mirror system 10). A condenser lens can be arranged in front of the light source 61 to direct the light beam 63 as a parallel beam onto the mirrors 12. In particular, the light source 61 can be configured to emit red, green and blue light.

As shown in Fig. 6a, the mirrors 12 of the system 10 that are arranged in the ON state reflect the light onto the aperture 62. The aperture 62 can be projection lens, which is configured to project an image based on a light beam 64 that is reflected from mirrors 12 in the ON sate onto a screen 65. In particular, the reflected light beam 64 from the mirrors 12 in the ON state aligns with an optical axis of the projection apparatus 60. The mirrors 12 in the ON state are, for example, tilted at a tilting angle of +12° (relative to an axis that is perpendicular to the support surface 11 of the mirror system 10).

As shown in Fig. 6b, the mirrors 12 of the system 10 that are arranged in the OFF state reflect the light away from the aperture 62 and onto an absorption structure 66 of the projection apparatus 60. The mirrors 12 in the OFF state are, for example, tilted at a tilting angle that is asymmetric to the tilting angle of mirrors in the ON state, e.g. smaller or larger than -12° (relative to an axis that is perpendicular to the support surface). For instance, the tilting angle of mirrors 12 in the OFF state is -8°.

In particular, diffraction light from mirrors 12 at a reflection angle moves in the direction of the mirror tilt. The further the diffraction light is deflected from the aperture 62 the less stray light reaches the aperture 62, which improves the contrast of the image on the screen 65.

Another way to decrease the amount of diffraction and stray light from mirrors in the OFF state that reaches aperture 62, is to decrease the angle of incident of the light beam 63 that is emitted towards the mirror system 10, for instance to an angle smaller than 66° (relative to the support surface 11 of the mirror system 10).

## Claims

1. A mirror system (10) for a projection apparatus (60), wherein the projection apparatus (60) comprises a light source (61) and an aperture (62), wherein the mirror system (10) comprises:
a support surface (11); and
a plurality of mirrors (12) arranged on the support surface (11);
wherein each of the plurality of mirrors (12) is arranged tiltable between a first and a second tilting position, wherein the first and the second tilting position are discrete positions;
wherein each mirror (12) in the first tilting position is arranged to reflect a light beam (63) that is emitted from the light source (61) onto the aperture (62);
wherein each mirror (12) in the second tilting position is arranged to reflect the light beam (63) that is emitted from the light source (61) away from the aperture (62);
wherein a tilting axis (T) of each of the plurality of mirrors (12) passes through or lies below the center of gravity (C) of the mirror (12); and
wherein the first and the second tilting position of each of the plurality of mirrors (12) are asymmetrical to each other;
wherein
two stopper structures (17-1, 17-2) are arranged on the support surface (11) below each mirror (12) of the plurality of mirrors (12), wherein a mirror (12) in the first tilting position is in physical contact with one of the two stopper structures (17-1, 17-2), and wherein the mirror (12) in the second tilting position is in physical contact with the other one of the two stopper structures (17-1, 17-2),
wherein the two stopper structures (17-1, 17-2) below each mirror of the plurality of mirrors have a different height and/or are arranged at a different distance from the tilting axis of the mirror (12); and
**characterized in that**
at least one recess (19) is arranged in the support surface (11) below each of the plurality of mirrors (12), wherein an edge of each mirror (12) of the plurality of mirrors (12) in the first and/or the second tilting position at least partially sinks into the recess (19) below the mirror (12).

2. The mirror system (10) of claim 1, wherein, an inclination of each mirror (12) in the first tilting position to the mirror (12) in the second tilting position is at least 10°.

3. The mirror system (10) of claim 1 or 2, wherein a mount (16) is arranged on the support surface (11) below each of the plurality of mirrors (12), wherein each of the plurality of mirrors (12) is fixated to the support surface (11) by the respective mount (16) that is arranged below that mirror (12).

4. The mirror system (10) of claim 3, wherein each of the plurality of mirrors (12) comprises a hinge structure (21), in particular a hinge layer, on a bottom of the mirror (12), wherein the respective mount (16) is fixed to the hinge structure (21) of the mirror (12).

5. The mirror system (10) of claim 3 or 4, wherein each of the plurality of mirrors (12) is tiltable around the respective mount (16).

6. The mirror system (10) of any one of claims 3 to 5, wherein each of the plurality of mirrors (12) comprises a cavity (20) on the bottom of the mirror (12), wherein the attachment point of the respective mount (16) is arranged in or below the cavity (20).

7. The mirror system (10) of any one of the preceding claims, wherein a pair of actuation electrodes (18-1, 18-2) is arranged on the support surface (11) below each of the plurality of mirrors (12), wherein the actuation electrodes (18-1, 18-2) below each mirror (12) are configured to actuate the movement of the mirror (12) from the first to the second tilting position and vice versa.

8. The mirror system (10) of claim 7, wherein the pair of actuation electrodes (18-1, 18-2) of each mirror (12) are arranged on opposite sides and at equal distances to the tilting axis of the mirror (12).

9. The mirror system (10) of any one of the preceding claims, wherein each of the plurality of mirrors (12) comprises a spring element on an underside of the mirror.

10. The mirror system (10) of any one of the preceding claims, wherein at least some of the mirrors (12) of the plurality of mirrors that are arranged in the second tilting position form a Blazed grating for the light beam (63).

11. The mirror system (10) of claim 10, wherein the angle at which the light beam is reflected off the at least some of the mirrors (12) in the second tilting corresponds to a Blaze angle of the Blazed grating.

12. A projection apparatus (60), comprising a light source (61), an aperture (62) and a mirror system (10) of any one of the preceding claims.

## Patentansprüche

1. Spiegelsystem (10) für eine Projektionsvorrichtung (60), wobei die Projektionsvorrichtung (60) eine Lichtquelle (61) und eine Apertur (62) umfasst, wobei das Spiegelsystem (10) umfasst:
eine Tragefläche (11); und
eine Vielzahl von Spiegeln (12), angeordnet auf der Tragefläche (11);
wobei jeder aus der Vielzahl von Spiegeln (12) zwischen einer ersten und einer zweiten Kippstellung kippbar eingerichtet ist, wobei die erste und die zweite Kippstellung diskrete Stellungen sind;
wobei jeder Spiegel (12) in der ersten Kippstellung eingerichtet ist zum Reflektieren eines Lichtstrahls (63), der von der Lichtquelle (61) emittiert wird, auf die Apertur (62);
wobei jeder Spiegel (12) in der zweiten Kippstellung eingerichtet ist zum Reflektieren des Lichtstrahls (63), der von der Lichtquelle (61) emittiert wird, von der Apertur (62) weg;
wobei eine Kippachse (T) von jedem aus der Vielzahl von Spiegeln (12) durch den Schwerpunkt (C) des Spiegels (12) hindurchgeht oder darunter liegt; und
wobei die erste und die zweite Kippstellung von jedem aus der Vielzahl von Spiegeln (12) zueinander asymmetrisch sind;
wobei
zwei Anschlagstrukturen (17-1, 17-2) auf der Tragefläche (11) unter jedem Spiegel (12) aus der Vielzahl von Spiegeln (12) angeordnet sind, wobei sich ein Spiegel (12) in der ersten Kippstellung in physischem Kontakt mit einer der beiden Anschlagstrukturen (17-1, 17-2) befindet, und wobei sich der Spiegel (12) in der zweiten Kippstellung in physischem Kontakt mit der anderen der beiden Anschlagstrukturen (17-1, 17-2) befindet,
wobei die zwei Anschlagstrukturen (17-1, 17-2) unter jedem Spiegel aus der Vielzahl von Spiegeln eine unterschiedliche Höhe aufweisen und/oder in einem anderen Abstand von der Kippachse des Spiegels (12) angeordnet sind; und
**dadurch gekennzeichnet, dass**
mindestens eine Ausnehmung (19) in der Tragefläche (11) unter jedem aus der Vielzahl von Spiegeln (12) angeordnet ist, wobei eine Kante von jedem Spiegel (12) aus der Vielzahl von Spiegeln (12) in der ersten und/oder der zweiten Kippstellung zumindest teilweise in die Ausnehmung (19) unter dem Spiegel (12) einsinkt.

2. Spiegelsystem (10) nach Anspruch 1, wobei eine Neigung von jedem Spiegel (12) in der ersten Kippstellung zu dem Spiegel (12) in der zweiten Kippstellung mindestens 10° beträgt.

3. Spiegelsystem (10) nach Anspruch 1 oder 2, wobei eine Halterung (16) auf der Tragefläche (11) unter jedem aus der Vielzahl von Spiegeln (12) angeordnet ist, wobei jeder aus der Vielzahl von Spiegeln (12) an der Tragefläche (11) durch die jeweilige Halterung (16), die unter diesem Spiegel (12) angeordnet ist, befestigt ist.

4. Spiegelsystem (10) nach Anspruch 3, wobei jeder aus der Vielzahl von Spiegeln (12) eine Scharnierstruktur (21), insbesondere eine Scharnierschicht, an einem Boden des Spiegels (12) umfasst, wobei die jeweilige Halterung (16) an der Scharnierstruktur (21) des Spiegels (12) befestigt ist.

5. Spiegelsystem (10) nach Anspruch 3 oder 4, wobei jeder aus der Vielzahl von Spiegeln (12) um die jeweilige Halterung (16) herum kippbar ist.

6. Spiegelsystem (10) nach einem der Ansprüche 3 bis 5, wobei jeder aus der Vielzahl von Spiegeln (12) eine Aushöhlung (20) in dem Boden des Spiegels (12) umfasst, wobei der Anbringungspunkt der jeweiligen Halterung (16) in oder unter der Aushöhlung (20) angeordnet ist.

7. Spiegelsystem (10) nach einem der vorhergehenden Ansprüche, wobei ein Paar von Antriebselektroden (18-1, 18-2) auf der Tragefläche (11) unter jedem aus der Vielzahl von Spiegeln (12) angeordnet ist, wobei die Antriebselektroden (18-1, 18-2) unter jedem Spiegel (12) ausgelegt sind zum Antreiben der Bewegung des Spiegels (12) aus der ersten in die zweite Kippstellung und umgekehrt.

8. Spiegelsystem (10) nach Anspruch 7, wobei das Paar von Antriebselektroden (18-1, 18-2) von jedem Spiegel (12) an entgegengesetzten Seiten und in gleichen Abständen von der Kippachse des Spiegels (12) angeordnet ist.

9. Spiegelsystem (10) nach einem der vorhergehenden Ansprüche, wobei jeder aus der Vielzahl von Spiegeln (12) ein Federelement auf einer Unterseite des Spiegels umfasst.

10. Spiegelsystem (10) nach einem der vorhergehenden Ansprüche, wobei mindestens einige der Spiegel (12) aus der Vielzahl von Spiegeln, die in der zweiten Kippstellung angeordnet sind, ein Blazegitter für den Lichtstrahl (63) bilden.

11. Spiegelsystem (10) nach Anspruch 10, wobei der Winkel, unter dem der Lichtstrahl von den mindestens einigen der Spiegel (12) in der zweiten Kippstellung reflektiert wird, einem Blazewinkel des Blazegitters entspricht.

12. Projektionsvorrichtung (60), umfassend eine Lichtquelle (61), eine Apertur (62) und ein Spiegelsystem (10) nach einem der vorhergehenden Ansprüche.

## Revendications

1. Système (10) de miroirs pour un appareil de projection (60), l'appareil de projection (60) comprenant une source lumineuse (61) et une ouverture (62), le système (10) de miroirs comprenant :
une surface de support (11) ; et
une pluralité de miroirs (12) agencés sur la surface de support (11) ;
chacun de la pluralité de miroirs (12) étant agencé inclinable entre une première et une deuxième position d'inclinaison, la première et la deuxième position d'inclinaison étant des positions discrètes ;
chaque miroir (12) dans la première position d'inclinaison étant agencé de manière à réfléchir un faisceau lumineux (63) qui est émis par la source lumineuse (61) sur l'ouverture (62) ;
chaque miroir (12) dans la deuxième position d'inclinaison étant agencé de manière à réfléchir le faisceau lumineux (63) qui est émis par la source lumineuse (61) à l'écart de l'ouverture (62) ;
un axe d'inclinaison (T) de chacun de la pluralité de miroirs (12) passant par, ou se situant sous, le centre de gravité (C) du miroir (12) ; et
la première et la deuxième position d'inclinaison de chacun de la pluralité de miroirs (12) étant asymétriques entre elles ;
deux structures de butée (17-1, 17-2) étant agencées sur la surface de support (11) sous chaque miroir (12) de la pluralité de miroirs (12), un miroir (12) dans la première position d'inclinaison étant au contact physique d'une des deux structures de butée (17-1, 17-2), et le miroir (12) dans la deuxième position d'inclinaison étant au contact physique de l'autre des deux structures de butée (17-1, 17-2),
les deux structures de butée (17-1, 17-2) sous chaque miroir de la pluralité de miroirs étant pourvues d'une hauteur différente et/ou étant agencées à une distance différente de l'axe d'inclinaison du miroir (12) ; et
**caractérisé en ce que**
au moins un renfoncement (19) est ménagé dans la surface de support (11) sous chacun de la pluralité de miroirs (12), un bord de chaque miroir (12) de la pluralité de miroirs (12) dans la première et/ou la deuxième position d'inclinaison s'enfonçant au moins partiellement dans le renfoncement (19) sous le miroir (12) .

2. Système (10) de miroirs selon la revendication 1, dans lequel une inclinaison de chaque miroir (12) dans la première position d'inclinaison par rapport au miroir (12) dans la deuxième position d'inclinaison est d'au moins 10°.

3. Système (10) de miroirs selon la revendication 1 ou 2, dans lequel une fixation (16) est agencée sur la surface de support (11) sous chacun de la pluralité de miroirs (12), chacun de la pluralité de miroirs (12) étant fixé à la surface de support (11) par la fixation (16) respective qui est agencée sous ce miroir (12).

4. Système (10) de miroirs selon la revendication 3, dans lequel chacun de la pluralité de miroirs (12) comprend une structure charnière (21), plus particulièrement une couche charnière, au bas du miroir (12), la fixation (16) respective étant fixée à la structure charnière (21) du miroir (12).

5. Système (10) de miroirs selon la revendication 3 ou 4, dans lequel chacun de la pluralité de miroirs (12) est inclinable autour de la fixation (16) respective.

6. Système (10) de miroirs selon l'une quelconque des revendications 3 à 5, dans lequel chacun de la pluralité de miroirs (12) comprend une cavité (20) au bas du miroir (12), le point d'attache de la fixation (16) respective étant agencé dans ou sous la cavité (20).

7. Système (10) de miroirs selon l'une quelconque des revendications précédentes, dans lequel une paire d'électrodes d'actionnement (18-1, 18-2) est agencée sur la surface de support (11) sous chacun de la pluralité de miroirs (12), les électrodes d'actionnement (18-1, 18-2) sous chaque miroir (12) étant configurées pour animer le miroir (12) d'un mouvement de la première à la deuxième position d'inclinaison et inversement.

8. Système (10) de miroirs selon la revendication 7, dans lequel la paire d'électrodes d'actionnement (18-1, 18-2) de chaque miroir (12) sont agencées de côtés opposés et à égales distances de l'axe d'inclinaison du miroir (12).

9. Système (10) de miroirs selon l'une quelconque des revendications précédentes, dans lequel chacun de la pluralité de miroirs (12) comprend un élément ressort sur un dessous du miroir.

10. Système (10) de miroirs selon l'une quelconque des revendications précédentes, dans lequel au moins certains des miroirs (12) de la pluralité de miroirs qui sont agencés dans la deuxième position d'inclinaison forment un réseau blazé pour le faisceau lumineux (63).

11. Système (10) de miroirs selon la revendication 10, dans lequel l'angle auquel le faisceau lumineux est réfléchi par les au moins certains des miroirs (12) dans la deuxième position d'inclinaison correspond à un angle de blaze du réseau blazé.

12. Appareil de projection (60), comprenant une source lumineuse (61), une ouverture (62) et un système (10) de miroirs selon l'une quelconque des revendications précédentes.
